# EUROPÄISCHE PATENTSCHRIFT

(11) **EP 2 785 538 B1**
(45) Veröffentlichungstag und Bekanntmachung des Hinweises auf die Patenterteilung: **07.03.2018**
(21) Anmeldenummer: 12794266.2
(22) Anmeldetag: 22.11.2012
(51) Int. Cl.: B60C 11/12, B60C 11/03

(54) **FAHRZEUGLUFTREIFEN**
VEHICLE TIRE
PNEUMATIQUE POUR VÉHICULE

(30) Priorität: 01.12.2011 DE 102011055915
(43) Veröffentlichungstag der Anmeldung: 08.10.2014
(73) Patentinhaber: Continental Reifen Deutschland GmbH, 30165 Hannover (DE)
(72) Erfinder: DIENSTHUBER, Franz, 30559 Hannover (DE); SENG, Matthias, 30449 Hannover (DE); KESSEL, Thiemo, 30826 Garbsen (DE)
(74) Vertreter: Finger, Karsten
(86) Internationale Anmeldenummer: PCT/EP2012/073300
(87) Internationale Veröffentlichungsnummer: WO 2013/079385

(56) Entgegenhaltungen:
- EP-A1- 1 215 055
- EP-A1- 1 961 587
- EP-A2- 2 199 111
- DE-A1- 19 711 607

## Beschreibung

Die Erfindung betrifft einen Fahrzeugluftreifen, insbesondere für den Einsatz unter winterlichen Fahrbedingungen, mit einem *laufrichtungsgebunden ausgeführten* Laufstreifen, welcher durch Rillen, Nuten und dergleichen in Profilelemente, beispielsweise Profilblöcke, gegliedert ist, wobei die Profilelemente jeweils eine Anzahl von sich zueinander parallel und unter einem Winkel ≤ 45° zur Laufstreifenquerrichtung erstreckenden Einschnitten versehen sind, *wobei die Einschnitte in den Profilelementen auf der einen Seite des Reifenäquators gegensinnig geneigt zu den Einschnitten in den Profilelementen, die sich an der anderen Seite des Reifenäquators befinden, verlaufen,* und wobei der Reifen einen statischen Footprint erzeugt, dessen dem Ein- und Auslauf zugeordnete Begrenzungslinien konvex gekrümmt sind.

Es ist bekannt und üblich, Fahrzeugluftreifen, die für den Einsatz unter winterlichen Fahrbedingungen vorgesehen sind, mit Profilelementen zu versehen, die jeweils eine Anzahl von Einschnitten einer Breite von 0,4 mm bis 0,8 mm aufweisen. Diese Einschnitte können auf unterschiedliche Weise ausgeführt sein, beispielsweise können sie in Draufsicht einen wellen- oder zick-zack-förmigen Verlauf aufweisen, zick-zack- oder wellenförmige Abschnitte besitzen oder als geradlinig verlaufende Einschnitte oder Einschnitte mit geradlinig verlaufenden Abschnitten ausgeführt sein. Die Einschnitte in den Profilelementen sind für den Schnee- und Eisgriff des Laufstreifens unerlässlich und sie beeinflussen die Quersteifigkeit und die Umfangssteifigkeit der Profilelemente, wobei zu den diesbezüglichen Einflussfaktoren der Neigungswinkel der Einschnitte relativ zur Reifenquerrichtung und die Ausführung der Einschnitte von Bedeutung sind.

Ein Fahrzeugluftreifen der eingangs genannten Art ist beispielsweise aus der EP 1 215 055 A1 bekannt. Dieser Reifen ist ein Winterreifen mit einem laufrichtungsgebunden ausgeführten Laufstreifen, welcher Profilblöcke aufweist, die jeweils mit einer Vielzahl von Einschnitten versehen sind, wobei die Einschnitte in den Profilblöcken auf der einen Seite des Reifenäquators gegensinnig geneigt zu den Einschnitten in den Profilblöcken auf der anderen Seite des Reifenäquators verlaufen. Fahrzeugluftreifen mit nicht laufrichtungsgebunden ausgeführten Laufstreifen, die ebenfalls für den Einsatz unter winterlichen Fahrbedingungen geeignet sind, sind aus der EP 1 961 586 A1, der EP 2 199 111 A2 und der DE 197 11 607 A1 bekannt. Die Laufstreifen dieser Fahrzeugluftreifen setzen sich aus Profilblockreihen zusammen, in deren Profilblöcken die jeweils in einer Anzahl vorgesehenen Einschnitte parallel zueinander verlaufen.

Aus der US 2002/00694 A1 ist ferner ein Winterreifen mit einem laufrichtungsgebunden ausgeführten Laufstreifen bekannt, welcher als Profilelemente ebenfalls ausschließlich Profilblöcke aufweist, die jeweils mit einer Vielzahl von Einschnitten versehen sind. Aus der EP 2 353 884 A1 ist ein Reifen mit einer laufrichtungsgebunden und gleichzeitig asymmetrisch ausgeführter Laufstreifen bekannt, welcher ebenfalls Profilblöcke als Profilelemente aufweist, wobei sich die Profilelemente im Außenabschnitt - dieser wird bei montiertem Reifen der Fahrzeugaußenseite zugewandt - strukturell deutlich von jenen im Innenabschnitt unterscheiden.

Üblicherweise erzeugen Fahrzeugluftreifen für Personenkraftwagen einen Footprint - dies ist der Abdruck des Reifens auf dem Untergrund -, deren dem Ein- und dem Auslauf zugewandte bzw. zugeordnete Begrenzungslinien zumindest im Wesentlichen übereinstimmend konvex gekrümmt sind. Beim Abrollen des Fahrzeugluftreifens durchlaufen die Profilelemente und somit deren Profilelementteile die zwischen den Einschnitten im Profilblock und zwischen jeweils einem Einschnitt und einer Profilblockkante gebildet sind, den Footprint und werden infolge der Radlast und der entgegen der Drehrichtung wirkenden Reibkraft verformt und abgerieben. Bei Winterreifen entsteht oft infolge der Vielzahl der Einschnitte und der weicheren Laufstreifengummimischung beim Abrieb ein sogenanntes Sägezahnprofil, da sich die erwähnten Profilelementteile an der einlaufenden Kante mehr abreiben als an der auslaufenden Kante.

Der Erfindung liegt die Aufgabe zugrunde, bei einem Fahrzeugluftreifen der eingangs genannten Art sicherzustellen, dass ein ungleichmäßiges Abreiben der durch die Einschnitte in den Profilelementen gebildeten Profilelementteile deutlich verringert ist, wobei die Winter- und Trockenfahreigenschaften gleichermaßen gut erhalten bleiben sollen.

Gelöst wird die gestellte Aufgabe erfindungsgemäß dadurch, dass Geraden in Erstreckungsrichtung jener Einschnitte, welche innerhalb oder größtenteils innerhalb eines zur Äquatorlinie symmetrischen Umfangsabschnittes, welcher eine Breite von 25 % bis 35 % der Bodenaufstandsflächenbreite aufweist, einen Winkel *mit Tangenten an die ein- und auslaufenden Begrenzungslinien des Footprints in den Schnittpunkten mit den Geraden* einschließen, welcher 10° bis 20° beträgt und kleiner ist als der Winkel, den Geraden in Erstreckungsrichtung jener Einschnitte, die beidseitig des zentralen Umfangsabschnittes in mittleren Umfangsabschnitten verlaufen, deren Breite zwischen 12 % und 20 % der Bodenaufstandsflächenbreite beträgt, *mit Tangenten an die ein- und auslaufenden Begrenzungslinien des Footprints in den Schnittpunkten mit den Geraden* einschließen, wobei dieser Winkel 20° bis 30° beträgt.

Durch die erfindungsgemäße Auslegung des Einschnittverlaufes durch Zuhilfenahme von Winkeln im Footprint, treten die Einschnitte "kontinuierlich" in den Einlauf ein und aus dem Auslauf aus. Dadurch wird der erwähnte ungleichmäßige Abrieb der einzelnen Profilelementteile deutlich reduziert. Für die Profilelementquersteifigkeit und eine gute Handlingperformance des Reifens ist es vorteilhaft, wenn der Winkel im zentralen Umfangsabschnitt mindestens 10° beträgt und in den beiden mittleren Umfangsabschnitten größer ist.

In erfindungsgemäß ausgeführten Fahrzeugluftreifen können die Profilelemente im zentralen Umfangsabschnitt und/oder die Profilelemente in den mittleren Umfangsabschnitten Profilblöcke sein. Möglich ist jedoch auch eine Ausführung, bei welcher Profilbänder und/oder profilbandartige Strukturen im zentralen und/oder in den mittleren Umfangsabschnitten vorgesehen sind.

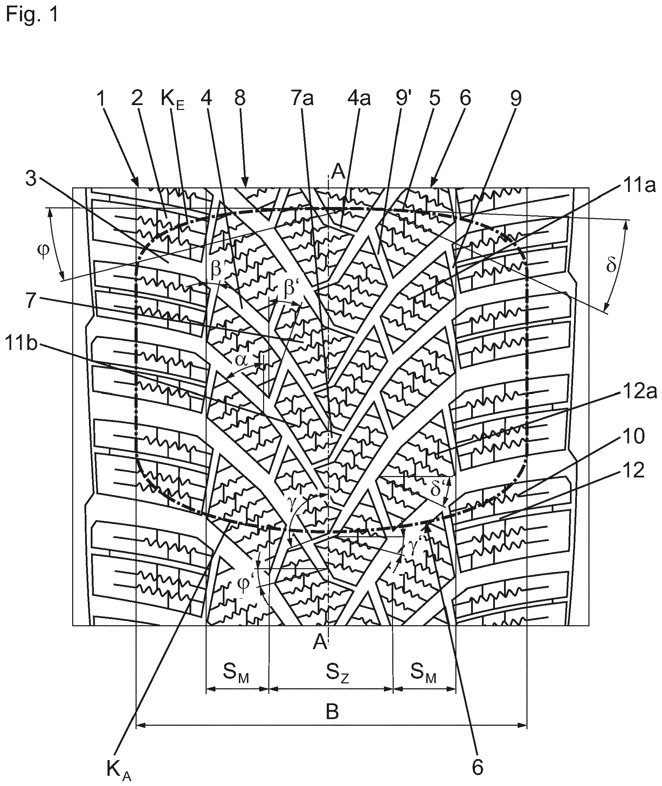

Weitere Merkmale, Vorteile und Einzelheiten der Erfindung werden nun anhand der Zeichnung näher beschrieben. Die einzige Figur, Fig. 1, zeigt eine Draufsicht auf eine Teilabwicklung eines Laufstreifenprofils eines Fahrzeugluftreifens mit einer Ausführungsform der Erfindung.

Der in Fig. 1 dargestellte Laufstreifen ist für einen Fahrzeugluftreifen für Personenkraftwagen in Radialbauart und insbesondere für den Einsatz unter winterlichen Fahrbedingungen vorgesehen. Der beispielhaft dargestellte Laufstreifen weist ferner ein laufrichtungsgebunden ausgeführtes Profil auf, wobei die Erfindung nicht auf solche Laufstreifenprofile eingeschränkt ist.

In Fig. 1 ist mit A-A der Reifenäquator bezeichnet, durch welchen der Laufstreifen des Fahrzeugluftreifens in zwei Hälften geteilt ist. Der Laufstreifen weist zwei Schulterblockreihen 1 auf, deren Profilblöcke 2 durch Quernuten 3, die im Wesentlichen in Laufstreifenquerrichtung bzw. unter einem kleinen spitzen Winkel in der Größenordnung von 5° bis 7° zur Laufstreifenquerrichtung geneigt verlaufen, voneinander getrennt sind. Die Quernuten 3 setzen sich in Richtung Laufstreifenmitte als Schrägrillen 4 fort, welche gegenüber der Umfangsrichtung bzw. dem Reifenäquator A-A unter einem Winkel α von 30° bis 50° verlaufen, wobei der Winkel α in Richtung Reifenäquator A-A kleiner wird. Durch den V-förmigen Verlauf der in den beiden Laufstreifenhälften angeordneten Schrägrillen 4 erhält das Laufstreifenprofil seine Laufrichtungsgebundenheit. Ein Reifen mit einem derart ausgeführten Laufstreifen ist so am Fahrzeug zu montieren, dass die innenseitigen Enden der Schrägrillen 4 beim Abrollen des Reifens in Fahrtrichtung zuerst in den Untergrund eintreten. In jeder Laufstreifenhälfte begrenzen die Schrägrillen 4 Profilblöcke 5 und 7, die zu zwei weiteren Blockreihen 6 und 8 gehören. Die der Umfangsrichtung des Laufstreifens zugeordneten Kanten der Profilblöcke 5 und die laufstreifenaußenseitig verlaufenden Kanten der Profilblöcke 8 sind unter Winkeln β, β' zur Umfangsrichtung und gegensinnig zu den Schrägrillen 4 geneigt, wobei β' um bis zu 5° größer ist als β und der Winkel β in der Größenordnung von 3° bis 15° gewählt wird. Kurze Umfangsnuten 9, 9' trennen daher die paarweise zusammengehörenden Profilblöcke 5 und 7 voneinander und die Profilblöcke 5 von den Profilblöcken 2. Entlang des Reifenäquators A-A bilden die Profilblöcke 7 der Blockreihen 8 einander überlappende und in Draufsicht etwa dreieckige Blockabschnitte 7a, welche von den Schrägrillen 4 und von kurzen Endabschnitten 4a der Schrägrillen 4 begrenzt sind. Die Endabschnitte 4a verlaufen unter einem Winkel γ zum Reifenäquator A-A, der in der Größenordnung von 90° bis 120° beträgt. Die dargestellte und beschriebene Ausführung und Ausgestaltung der Profilblöcke 2, 5, 7 und der diese begrenzenden Rillen 2, 3 bzw. Nuten 9 ist lediglich beispielhaft, die Profilblöcke können auch anders ausgestaltet sein, insbesondere können sie derart ausgeführt sein, dass in Umfangsrichtung gerade umlaufende Umfangsnuten gebildet sind.

Die Profilblöcke 2, 5 und 7 weisen jeweils eine Anzahl von Einschnitten 10, 11a und 11b auf, deren Breite zwischen 0,4 mm und 0,8 mm beträgt. In den schulterseitigen Profilblöcken 2 sind jeweils zwei oder drei Einschnitte 10 vorgesehen, die in Draufsicht über einen Großteil ihrer Erstreckung zick-zack- bzw. wellenförmig verlaufen. Die Einschnitte 10 verlaufen zueinander und zu den von den Quernuten 3 begrenzten Blockkanten parallel, wobei in jedem Profilblock 2 zwischen zwei Einschnitten 10 eine schmale, etwa 1 mm breite Rille 12 gerade und parallel zu den Einschnitten 10 verläuft. In den Profilblöcken 5 und 7 sind bei der dargestellten Ausführungsform jeweils sechs oder sieben parallel zueinander verlaufende Einschnitte 11a, 11b angeordnet, die ebenfalls in Draufsicht großteils einen wellen- bzw. zick-zack-förmigen Verlauf aufweisen und bezogen auf die Umfangsrichtung zu den Schrägrillen 4 gegensinnig geneigt sind.

Infolge der laufrichtungsgebundenen Ausführung des dargestellten Laufstreifens verlaufen die Einschnitte 11a, 11b in der einen Blockreihe 7, 8 auf der einen Seite des Reifenäquators A-A gegensinnig geneigt zu den Einschnitten 11a, 11b in der Blockreihe 7, 8, die sich an der anderen Seite des Reifenäquators A-A befinden. Die Winkel δ' und ϕ', die die Geraden in der Erstreckungsrichtung der Einschnitte 11a, 11b mit der Laufstreifenquerrichtung einschließen, sind kleine spitze Winkel. Die Profilblöcke 7 und die in ihnen verlaufenden Einschnitte 11b sind einem zentralen Umfangsabschnitt S_{Z} des Laufstreifens zugeordnet, welcher symmetrisch zur Äquatorebene A-A liegt und eine Breite zwischen 25 % und 35 % der Bodenaufstandsflächenbreite B aufweist. Die Bodenaufstandsflächenbreite B ist die Breite eines gemäß den E.T.R.T.O.-Standards (Last bei 70 % der Tragfähigkeit bei einem Innendruck von 2,5 bar, Innendruck 85 % von 2,5 bar) ermittelten statischen Footprints. An den zentralen Umfangsabschnitt S_{Z} schließen seitlich mittlere Umfangsabschnitte S_{M} an, deren Breite jeweils zwischen 12 % und 20 % der Bodenaufstandsflächenbreite B beträgt. Im Umfangsabschnitt S_{M} befinden sich großteils die Blockreihen 6 mit den Profilblöcken 5 und den in diesen verlaufenden Einschnitten 11a. Bei der gezeigten Ausführungsform mit zur Umfangsrichtung geneigten Umfangsnuten 9 reichen kleine Bereiche der Profilblöcke 7 in die mittleren Umfangsabschnitte S_{M} und kleine Bereiche der Profilblöcke 5 in den zentralen Umfangsabschnitt S_{Z}. Wesentlich ist, dass den Umfangsabschnitten S_{Z} und S_{M} Profilelemente mit Einschnitten eindeutig zugeordnet werden können.

Fig. 1 zeigt die Außenkonturen des statischen Footprints eines Reifens mit dem dargestellten Laufstreifenprofil. Der Footprint im Ein- und Auslauf wird von konvex gekrümmten Begrenzungslinien K_{E} und K_{A} begrenzt.

Der Verlauf bzw. die Erstreckungsrichtung der Einschnitte 11a in den Umfangsabschnitten S_{M} wird derart gewählt, dass Geraden in der Erstreckungsrichtung der Einschnitte 11a mit den Begrenzungslinien K_{E} und K_{A} einen Winkel δ einschließen, der zwischen 20° und 30° beträgt. Geraden in der Erstreckungsrichtung der Einschnitte 11b im zentralen Umfangsabschnitt S_{Z} schließen mit den Begrenzungslinien K_{E} und K_{A} einen Winkel ϕ ein, welcher kleiner ist als der Winkel δ und zwischen 10° und 20° beträgt. Entsprechend der Größen der Winkel ϕ und δ ergeben sich die tatsächlichen Erstreckungsrichtungen mit den Winkeln δ' und ϕ' der Einschnitte 11a und 11b in Laufstreifen. Die Winkel δ und ϕ werden zwischen den erwähnten Geraden in den Erstreckungsrichtungen der Einschnitte 11a, 11b und Tangenten an die Begrenzungslinien K_{A} und K_{E} in den Schnittpunkten mit den Geraden ermittelt.

Die Winkel δ und ϕ in den erwähnten Größenordnungen bewirken, dass die Profilblöcke 5, 7 derart am Untergrund abrollen, dass beim Einlaufen in und beim Auslaufen aus der Bodenaufstandsfläche jeder Einschnitt 11a und 11b kontinuierlich in die Bodenaufstandsfläche eintritt. Diese Maßnahme hat günstige Auswirkungen auf die Profilblocksteifigkeit und damit auf das Verformungsverhalten der Profilblöcke und wirkt einem ungleichmäßigen Abrieb entgegen.

Die Erfindung ist auf das dargestellte Ausführungsbeispiel nicht eingeschränkt. Insbesondere ist die Erfindung auf Laufstreifenprofile anwendbar, die nicht laufrichtungsgebunden ausgeführt sind und auch auf solche, die "asymmetrisch" ausgestaltet sind. Wesentlich ist, dass im zentralen Umfangsabschnitt und in den beiden mittleren Umfangsabschnitten die Einschnitte bzw. deren Erstreckung so gewählt wird, dass die erwähnten Winkel im Footprint gegeben sind. Dabei ist es ferner unerheblich, ob die Winkel bezüglich der Footprint-Begrenzungslinien in die eine oder die andere Richtung gemessen werden, maßgeblich ist die Winkelgröße und nicht die Richtung des Verlaufs der Einschnitte. Des Weiteren können Profilelemente mit erfindungsgemäß verlaufenden Einschnitten auch in Umfangsrichtung des Laufstreifens umlaufende Profilbänder sein.

### Bezugsziffernliste

- 1: Schulterblockreihe
- 2: Profilblock
- 3: Quernut
- 4: Schrägrille
- 4a: Endabschnitt
- 5: Profilblock
- 6: Blockreihe
- 7: Profilblock
- 7a: Blockabschnitt
- 8: Blockreihe
- 9: Umfangsnut
- 9: Umfangsnut
- 10: Einschnitt
- 11a: Einschnitt
- 11b: Einschnitt
- A-A: Äquatorebene
- K_{A}: Begrenzungslinie
- S_{Z}: zentraler Umfangsabschnitt
- S_{M}: mittlerer Umfangsabschnitt
- α: Winkel
- β: Winkel
- β': Winkel
- β": Winkel
- γ: Winkel
- ϕ: Winkel
- ϕ': Winkel
- δ: Winkel
- δ': Winkel

## Patentansprüche

1. Fahrzeugluftreifen, insbesondere für den Einsatz unter winterlichen Fahrbedingungen, mit einem *laufrichtungsgebunden ausgeführten* Laufstreifen, welcher durch Rillen (4), Nuten (3, 9) und dergleichen in Profilelemente, beispielsweise Profilblöcke (2, 5, 7), gegliedert ist, wobei die Profilelemente jeweils eine Anzahl von sich zueinander parallel und unter einem Winkel ≤ 45° zur Laufstreifenquerrichtung erstreckenden Einschnitten (11a, 11b) versehen sind, *wobei die Einschnitte (11a, 11b) in den Profilelementen auf der einen Seite des Reifenäquators (A-A) gegensinnig geneigt zu den Einschnitten (11a, 11b) in den Profilelementen, die sich an der anderen Seite des Reifenäquators (A-A) befinden, verlaufen,* und wobei der Reifen einen statischen Footprint erzeugt, dessen dem Ein- und Auslauf zugeordneten Begrenzunglinien (K_{E}, K_{A}) konvex gekrümmt sind, **dadurch gekennzeichnet,**
**dass** Geraden in Erstreckungsrichtung jener Einschnitte (11b), welche innerhalb oder größtenteils innerhalb eines zur Äquatorlinie (A-A) symmetrischen Umfangsabschnittes (S_{Z}), welcher eine Breite von 25 % bis 35 % der Bodenaufstandsflächenbreite (B) aufweist, einen Winkel (ϕ) *mit Tangenten an die ein- und auslaufenden Begrenzungslinien (K_{A} und K_{E}) des Footprints in den Schnittpunkten mit den Geraden* einschließen, welcher 10° bis 20° beträgt und kleiner ist als der Winkel (δ), den Geraden in Erstreckungsrichtung jener Einschnitte (11a), die beidseitig des zentralen Umfangsabschnittes (S_{Z}) und an diesen angrenzend, in mittleren Umfangsabschnitten (S_{M}) verlaufen, deren Breite zwischen 12 % und 20 % der Bodenaufstandsflächenbreite (B) beträgt, *mit Tangenten an die ein- und auslaufenden Begrenzungslinien (K_{A} und K_{E}) des Footprints in den Schnittpunkten mit den Geraden* einschließen, wobei dieser Winkel (δ) 20° bis 30° beträgt.

2. Fahrzeugluftreifen nach Anspruch 1, **dadurch gekennzeichnet, dass** die Profilelemente im zentralen Umfangsabschnitt (S_{Z}) Profilblöcke (7) sind.

3. Fahrzeugluftreifen nach Anspruch 1, **dadurch gekennzeichnet, dass** die Profilelemente in den mittleren Umfangsabschnitten (S_{M}) Profilblöcke (5) sind.

## Claims

1. Pneumatic vehicle tyre, in particular for use in winter driving conditions, comprising a tread of a directional configuration, which is divided into profile elements, for example profile blocks (2, 5, 7), by grooves (4), channels (3, 9) and the like, wherein the profile elements are each provided with a number of sipes (11a, 11b) extending parallel to one another and at an angle ≤ 45° to the transverse direction of the tread, wherein the sipes (11a, 11b) in the profile elements on one side of the tyre equator (A-A) run such that they are inclined oppositely to the sipes (11a, 11b) in the profile elements on the other side of the tyre equator (A-A), and wherein the tyre produces a static footprint whose bounding lines (K_{E}, K_{A}) associated with the runin and runout are convexly curved, **characterized**
**in that** straight lines in the direction of extent of those sipes (11b) that lie within or largely within a circumferential portion (S_{z}) symmetrical to the equator line (A-A) that has a width of 25% to 35% of the ground contact area width (B) enclose an angle (ϕ) with tangents to the running-in and running-out bounding lines (K_{A} and K_{E}) of the footprint at the points of intersection with the straight lines that is 10° to 20° and is less than the angle (δ) which straight lines in the direction of extent of those sipes (11a) that extend on both sides of the central circumferential portion (S_{Z}) and, adjoining thereto, in mid circumferential portions (S_{M}), the width of which is between 12% and 20% of the ground contact area width (B), enclose with tangents to the running-in and running-out bounding lines (K_{A} and K_{E}) of the footprint at the points of intersection with the straight lines, this angle (δ) being 20° to 30°.

2. Pneumatic vehicle tyre according to Claim 1, **characterized in that** the profile elements in the central circumferential portion (S_{Z}) are profile blocks (7).

3. Pneumatic vehicle tyre according to Claim 1, **characterized in that** the profile elements in the mid circumferential portions (S_{M}) are profile blocks (5).

## Revendications

1. Bandage pneumatique pour roue de véhicule, en particulier destiné à être utilisé en conditions hivernales de roulage, présentant une bande de roulement destinée à être utilisée dans un seul sens de rotation et divisée par des sillons (4), des rainures (3, 9) et similaires en éléments profilés, par exemple des blocs profilés (2, 5, 7),
les éléments profilés étant tous dotés de plusieurs entailles (11a, 11b) qui s'étendent parallèlement les unes aux autres et forment un angle ≤ 45° par rapport à la direction transversale de la bande de roulement,
les entailles (11a, 11b) prévues dans les éléments profilés sur un côté de l'équateur (A-A) du bandage de roue étant inclinées dans la direction opposée à celle des entailles (11a, 11b) prévues dans les éléments profilés situés sur l'autre côté de l'équateur (A-A) du bandage de roue,
le bandage de roue formant une empreinte statique dont les lignes frontières (K_{E}, K_{A}) associées à l'entrée et à la sortie sont incurvées de manière convexe, **caractérisé en ce que**
des droites situées dans la direction d'extension de l'entaille (11b), qui présentent à l'intérieur ou pour la plus grande part à l'intérieur d'une section périphérique (S_{Z}) symétrique par rapport à la ligne équatoriale (A-A) et dont la largeur représente de 25 % à 35 % de la largeur (B) de la surface d'appui au sol forment avec des tangentes aux lignes frontières (K_{A} et K_{E}) d'entrée et de sortie de l'empreinte aux points de concours avec les droites un angle (ϕ) compris entre 10° et 20° et inférieur à l'angle (δ) des droites situées dans la direction de l'extension de l'entaille (11a) qui s'étend des deux côtés de la section périphérique centrale (S_{z}) et adjacentes à cette dernière dans les sections périphériques centrales (S_{M}), dont la largeur représente entre 12 % et 20 % de la largeur (B) de la surface d'appui au sol, forment avec des tangentes des lignes frontières (K_{A} et K_{E}) et de sortie de l'empreinte aux points de concours avec les droites, cet angle (δ) étant compris entre 20° et 30°.

2. Bandage pneumatique pour roue de véhicule selon la revendication 1, **caractérisé en ce que** les éléments profilés de la section périphérique centrale (Sz) sont des blocs profilés (7).

3. Bandage pneumatique pour roue de véhicule selon la revendication 1, **caractérisé en ce que** les éléments profilés des sections périphériques (S_{M}) du milieu sont des blocs profilés (5).
